# EUROPEAN PATENT APPLICATION

(11) **EP 2 093 866 A1**
(43) Date of publication of application: **26.08.2009**
(21) Application number: 08003398.8
(22) Date of filing: 25.02.2008
(51) Int. Cl.: H02K 9/00, F04D 25/08, F04D 29/58, H02K 9/12

(54) **Dynamoelectric machine**

(71) Applicant: SIEMENS AKTIENGESELLSCHAFT, 80333 München (DE)
(72) Inventor: Buse, Marcel, 7531 Enschede (NL)

(57) **Abstract**

The invention relates to an electro-dynamic machine in particular to an electric motor (4) driving a compressor (1), with a rotor (6) and a stator (5), which stator (5) surrounds the rotor (6) at least partially, providing a circumferential gap (120) between the stator (5) and the rotor (6), which gap (120) contains a fluid (100). The rotation can lead to instabilities caused by the fluid, which is accelerated circumferentially. To improve rotor dynamics the invention proposes that at least a part of the fluid (100) is supplied into the gap (120) in the area between a first axial end (130) of the stator (6) and a second axial end (131) of the stator (6) by an intermediate fluid supply (150).

## Description

The invention relates to an Electro-dynamic machine, in particular an electric motor, in particular an electric motor driving a compressor, with a rotor and a stator, which stator surrounds at least partially the rotor providing a circumferential gap between the stator and the rotor, which gap contains a fluid.

Such an electro-dynamic machine is known whitely especially in the fields of motors and generators. The fluid in the gap between the rotor and the stator most often serves the purpose of cooling adjacent modules. For example eddy-current-losses are dissipated as heat, which needs be conducted away. As a fluid regularly gases and liquids of different densities and viscosities are applied. Depending on the rotational speed, the diameter of the rotor, the size of the clearing between the rotor and the inner surface of the cylindrical borehole in the stator and the properties of the fluid temperate according to operating conditions, the fluid motion dynamics can have an impact on the rotor dynamics. Vice versa depending on the same parameters as mentioned above, the rotor dynamics do have an impact on the fluid dynamics, respectively the velocity distribution. According to Bernoulli's law the pressure distribution in the fluid is directly influenced by the velocity distribution.

The invention deals with the problem that shaft excitements respectively displacements leading to an eccentric position of the rotor shaft with respect to the inner borehole of the stator are amplified by the fluid dynamics in the gap between the rotor and the stator, which instability can lead to an amplification of vibration or a contact between the stator and the rotor having undesirable consequences.

It is therefore one object of the invention to improve rotor dynamics of an electro-dynamic machine of the incipiently mentioned type.

This object it achieved by an electro-dynamic machine of the introductorily type, wherein fluid is supplied into the gap in the area between a first axial end of the stator and a second axial end of the stator by an intermediate fluid supply.

The stator according to the invention has a finite longitudinal width, ending on both sides in axial ends. Between these ends a fluid supply is arranged, for instance as a duct from an outer diameter of the stator to an opening into the inner diameter of a cylindrical borehole of the stator, through which the rotor shaft extends. The fluid is not supplied on one axial end flowing all the way through the gap to the other axial end driven by a pressure difference but the fluid is pressurized in the fluid supply in such a way that it enters the gap and is divided to flow in preferably equal portions to both sides.

Applying this concept, rotor dynamics can significantly be improved. The reason for the improvement is assumed to be the smaller axial length the fluid has to flow through the circumferential gap gaining circumferential speed. It was observed, that the lower the circumferential speed is, the lesser are the swirling components in the velocity distribution. It seems that this way the destabilizing effect due to the relation between the fluid dynamics and the rotor dynamics can be decreased. Shortening the axial flow path by the constructive measure according to the invention is according to the invention stabilizing the system and makes it capable to scope with a whider range of operating conditions.

A preferred embodiment of the invention provides a supply of the fluid into the gap, which is approximately located in the middle of the stator, so that the axial lengths on both sides of the supply are abroad equal to the respective ends of the stator. This solution is especially interesting, when the exiting pressure on both axial ends of the stator are the same and so especially if the fluid is a compressible gas, equal amounts of the fluid are flowing to both sides.

Preferably the fluid is a gas, which can be advantageously a process gas, for instants tapped off from an adjacent compression.

In a further embodiment, the present invention provides an electro-dynamic machine comprising a cooler, through which the fluid flows after passing the gap in a closed circle. A benefit gained by such an arrangement is the reduction of the risk of foreign particles entering the system due to the avoidance of media exchange. If a nearby systems operates with a fluid, which is applicable as a cooling fluid for the electro-dynamic machine according to the invention, the fluid supply can be part of an open loop, so that the fluid passes the gap only once, Respectively is permanently refreshed. This way a cooler might not be necessary.

In another embodiment of the invention the fluid enters the gap through an entrance opening, which - in the area of the supply - occupies between 10% and 40% of the circumferencial length of a cylindrical hole provided in the stator, in which the rotor is located. These structural features go along with a sufficient rigidity of the stator and an advantageous flow distribution during the entering of the fluid.

A further refinement of the invention provides the supply of the fluid in a counterrotating direction with respect to the direction of rotation of the rotor shaft. The counterrotating supply leads to a velocity distribution, which is resisting over a long axial length to gain circumferential speed with the known negative influence on stability. Ideally the inclination of the injection direction of the fluid into the gap can be 0° with respect to the circumference respectively the tangent on the rotor's surface. However, positive effects can still be observed with an inclination of 45° with respect to the tangent, wherein the flow meets the circumference in a counterrotating manner.

The supply of the fluid is preferably directed perpendicular through the rotor axis.

To smoothen the flow of the supply, when it is divided into desired portions, which are flowing to one end of the stator or to the other, a flow-diverting or a flow-directing element can be provided on the rotor extending along the circumference and facing the fluid flow of the supply entrance into the gap. Such element can be of a triangular or a spike-like cross section, wherein the supply has a recess provided on the inner surface of the cylindrical borehole of the stator.

The invention can be advantageously applied to a machine with a compressor, wherein the electro-dynamic machine according to the invention is a motor driving the compressor and wherein the machine has a gas-tight housing enclosing the electro-dynamic machine - respectively the motor - and the compressor, and wherein the fluid is a process fluid, which is extracted from the compressor after at least one compression stage.

Moreover the invention deals with a method to improve rotor dynamics of an electro-dynamic machine of the above mentioned type comprising the following steps
1.) providing a fluid supply duct in the stator leading to a circumferential gap between the stator and the rotor,
2.) establishing a flow from the supply duct to the axial end of the stator through the circumferential gap.

Another advantage of the Electro-dynamic machine, the installation and the method according to the invention is the better cooling effect of the fluid, which is exposed only a shorter axial length to the head generating components of the rotor and the stator. Compared to a cooling fluid flowing the hole axial distance to the gap the cooling concept according to the invention establishes a more contents temperature distribution over the length of the stator.

The above mentioned attributes and other features and advantages of this invention and the manner of attaining them will become more aparent and the invention itself will be better understood by reference to the following disciption of the currently best mode of carrying out the invention taken in conjunction with the accompanying drawings, wherein:
Figure 1 shows a schematic crosssection through a submarine compressor unit in a gas-tight housing, in which an electro-dynamic machine according to the invention is enclosed driving the compressor,
Figure 2 shows a schematic crosssection through the electro-dynamic machine in figure 1 according to a perspective indicated in Figure 1 by reference number X.

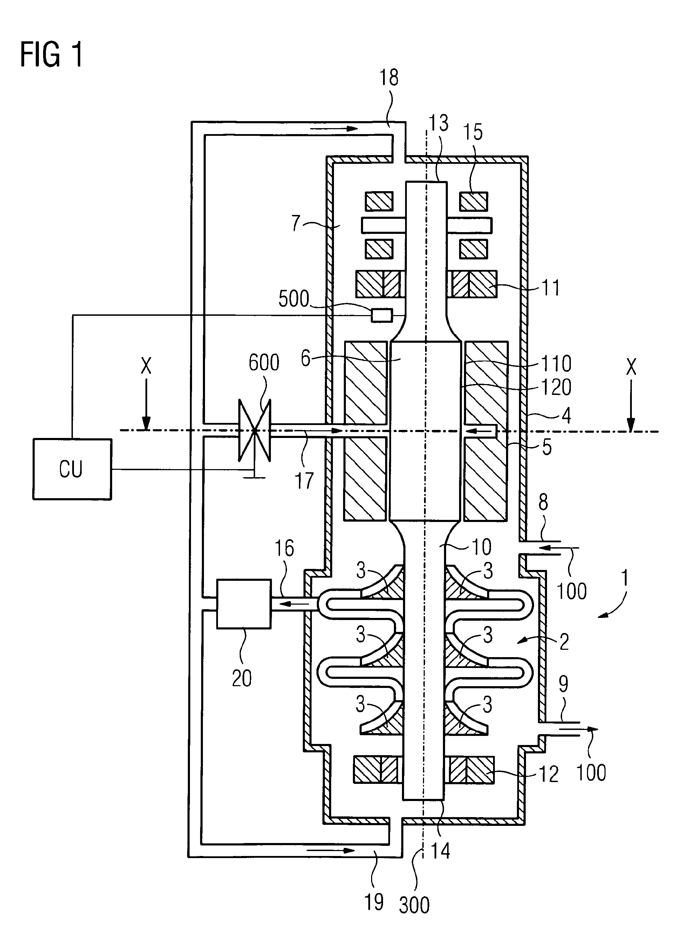

Figure 1 shows a compressor 1 with a compressor rotor 2 carrying three compressor impellers 3. The compressor 1 is driven by a motor 4 comprising a stator 5 and a motor rotor 6. The compressor 1 and the motor 4 are sharing a common shaft 10. The motor 4 and the compressor 1 are both enclosed by a gas-tight housing 7, which makes any rotor sealing to the surrounding unnecessary. This compressor type is especially useful for under-water operation or when toxic gases must be compressed. The gas-tight housing 7 has a gas inlet 8 and a gas outlet 9, through which process gas respecetively fluid 100 enters, respectively leaves the compressor 1. The single-piece rotor shaft 10 is supported in two radial bearings 11, 12 and one axial bearing 15, which radial bearings 11, 12 are located at both ends of the rotor shaft 10 and wherein the axial bearing 15 is located at the end 13 of the rotor shaft 10, which is adjacent to the motor 4. The process fluid 100 is partially tapped off after the first impellor 3 before entering the second impellor 3 by line 16, entering subsequently a filter 20. After the filter 20 the process fluid 100 is divided to enter
lines 17, 18 and 19 and to serve as a cooling fluid for the bearings 11, 12 and 15 and for the stator 5 of the motor 4 and for the motor 4 in general.

The stator 5 has a cylindrical inner borehole 110, through which the motor rotor 6 extends, providing a radial gap 120 over the whole circumference of the motor rotor 6 respectively the inner borehole 110. The process fluid 100 enters the gap 120 through the stator 5 and is divided into two equal portions flowing through the gap 120 in the direction of the respective axial ends 130, 131 of the motor stator 5. Similar to a Coujette flow distribution, the
fluid 100 entering the gap 120 is accelerated by the rotation of the rotor shaft 10 in a circumferential direction. To smoothen the diversion of the fluid 100 entering the gap 120 a guide element 140 is provided on the rotor surface in the area of the fluid supply 150.

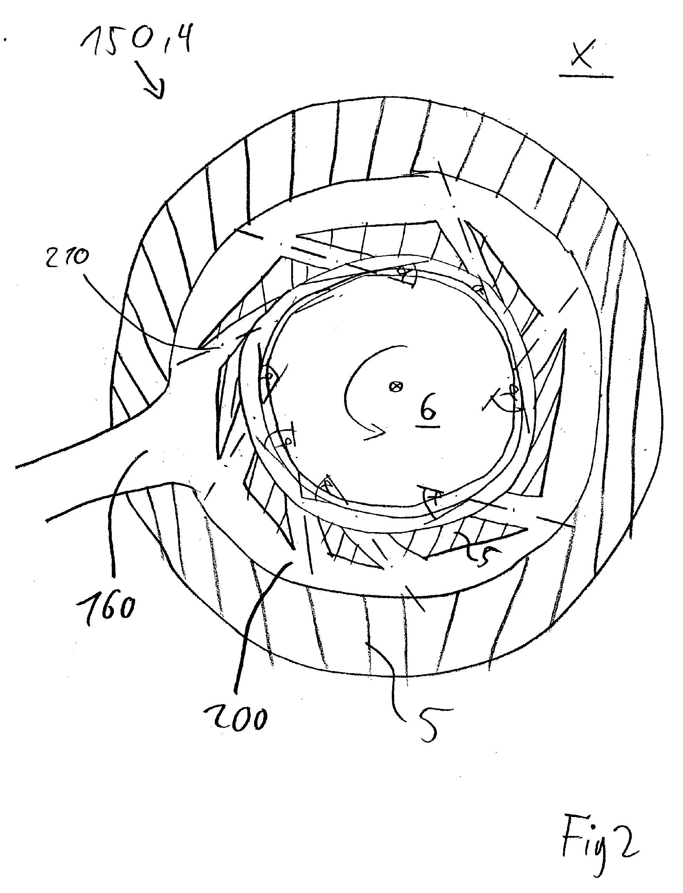

The fluid supply 150 is shown in more detail in figure 2, were a cross-section in the perspective referenced by X in figure 1 is depicted. The cross-section through the stator 5 and the motor rotor 6 shows the area of the fluid supply 150 respectively the entrance 160 of the fluid 100 into the
gap 120. In the stator 5 a circumferential channel 200 is provided to distribute the fluid 100 around the motor rotor 6 evenly. From the channel 200 multiple ducts 210 lead the fluid 100 into the circumferential gap 120 between the stator 5 and the motor rotor 6. Multiple ducts 210 can be two or more ducts 210.

The motor rotor 6 rotates anticlockwise and the ducts 210 are inclined in such a manner that the fluid 100 enters the
gap 120 having a nearly antiparallel velocity, respectively a counterrotating flow velocity. The ducts 210 have an axis of their longitudinal extension, which encloses a flat angle α with a tangent to the motor rotor 6 surface. The angle α can be between 0° and 45° to obtain a desired effect of low turbulence combined with a counterrotating velocity component of the entering fluid 100 avoiding the early gaining of a high circumferential speed in the rotation direction.

The fluid 100 enters the gap 120 perpendicular to an axis 300 of the rotor shaft 10. The guide element 140 can be used to lower turbulence at this shape bench of 90° of fluid flow but is not necessary for proper operation of the system since the pressure difference between line 17 and the axial
ends 130, 131 of the stator 5 is chosen to be sufficient to establish the desired flow distribution through the gap 120.

As a further optional feature advantageously the supply 150 respectively the line 17 can be equipped with a valve 600, which is connected to a control unit CU, which
control unit CU receives data from a vibration sensor 500 observing the vibration of the shaft 10 or of the stator 5 or of both. According to this the control unit CU controls the opening of the wave 600 respectively the mass flow through the supply 150 respectively the pressure of the fluid 100 entering the supply 150 to minimize vibration occurrence or instability. Such a control provides the option to react on instabilities by opening the valve 600 and therefore accelerating the of the flow in an axial direction in the gap 120.

## Claims

1. Electro-dynamic machine,
in particular electric motor (4), in particular electric motor driving a compressor (1),
with a rotor (6) and a stator (5),
which stator (5) surrounds the rotor (6) at least partially, providing a circumferential gap (120) between the stator (5) and the rotor (6),
which gap (120) contains a fluid (100),
**characterized in that**
at least a part of the fluid (100) is supplied into the gap (120) in the area between a first axial end (130) of the stator (6) and a second axial end (131) of the stator (6) by an intermediate fluid supply (150).

2. Electro-dynamic machine according to claim 1,
**characterized in that**
the supply (150) is approximately located in the axial middle of the stator (5), so that the axial length of stator (6) on both sides of the supply (150) are about equal.

3. Electro-dynamic machine according to claim 1 or 2,
**characterized in that**
the fluid (100) is gaseous.

4. Electro-dynamic machine according to one of the preceding claims 1, 2 or 3,
**characterized in that**
the electro-dynamic machine comprises a cooler and the fluid (100) flows in a closed cycle, in which the fluid (100) passes the gap (120) and the cooler.

5. Electro-dynamic machine according to one of the preceding claims 1 to 3,
**characterized in that**
the supply (150) is part of an open loop, so that the fluid (100) passes the gap (120) only once.

6. Electro-dynamic machine according to one of the preceding claims 1 to 5,
**characterized in that**
the fluid (100) enters the gap (120) through an entrance (160) opening, which occupies in the area of the supply (150) between 10% to 40% of a circumference of a cylindrical hole of the stator (5), in which the rotor (6) of the motor (4) is located.

7. Electro-dynamic machine according to one of the preceding claims 1 to 6,
**characterized in that**
the fluid (100) is supplied into the circumferential gap (120) with a velocity direction, which in the average directed anti-parallel to the circumferential speed of the rotor surface the flow faces.

8. Electro-dynamic machine according to one of the preceding claims 1 to 7,
**characterized in that**
the ducts (210) of the supply (150) are build in such a manner, that the fluid enters the gap (120) with an inclination angle α to a tangent of the rotor's circumference between 0° and 45°.

9. Electro-dynamic machine according to one of the preceding claims 1 to 8,
**characterized in that**
the fluid (100) is supplied to the gap (120) perpendicular to the rotational axis of the motor rotor (6).

10. Electro-dynamic machine according to one of the preceding claims 1 to 9,
**characterized in that**
the supply (150) provides several ducts (210) distributed over the circumference to supply fluid (100) into the gap (120).

11. Electro-dynamic machine according to one of the preceding claims 1 to 10,
**characterized in that**
a surface of the motor rotor (6) in the area of the supply (150) is provided with a diverting flow guiding element to divide the entering fluid (100) into definite proportions entering the gap into
anti-parallel directions towards the stator's respective ends (130, 131).

12. Installation with a compressor (1) and a electro-dynamic machine according to one of the preceding claims 1 to 11,
wherein the electro-dynamic machine is a motor (4) for driving the compressor (1), the installation having a gas-tight housing (7) enclosing the compressor (1) and the motor (4), and the fluid (100) is a process
fluid (100) extracted from the compressor (1) after at least one compression stage.

13. Method to improve the rotor dynamics of an electro-dynamic machine with a rotor (6) and a stator (5), which stator (5) surrounds the rotor (6) providing a circumferential gap (120) between the stator (5) and the rotor (6), which gap (120) contains a fluid (100), comprising the following steps:
- providing a fluid supply (150), which is located in the area between a first axial end (130) of the stator (5) and a second axial end (131) of the stator (5),
- establishing a flow from the supply (150) to the axial ends (130, 131) of the stator (5) through the gap (120) by applying a pressure difference.
